# EUROPEAN PATENT SPECIFICATION

(11) **EP 3 395 688 B1**
(45) Date of publication and mention of the grant of the patent: **18.01.2023**
(21) Application number: 18169919.0
(22) Date of filing: 27.04.2018
(51) Int. Cl.: B64D 13/08

(54) **CONFIGURABLE HIGH RATE CLOSED LOOP SMART VALVE CONTROL**
KONFIGURIERBARE INTELLIGENTE HOCHLEISTUNGSVENTILSTEUERUNG MIT GESCHLOSSENEM REGELKREIS
COMMANDE DE VANNE INTELLIGENTE CONFIGURABLE À DÉBIT ÉLEVÉ EN BOUCLE FERMÉE

(30) Priority: 27.04.2017 US 201762490782 P
(43) Date of publication of application: 31.10.2018
(73) Proprietor: Hamilton Sundstrand Corporation, Charlotte, NC 28217-4578 (US)
(72) Inventor: GRANT, Christopher, Chicopee, MA 01013 (US); MALJANIAN, JR. John M., Farmington, CT 06085 (US)
(74) Representative: Dehns

(56) References cited:
- EP-A2- 2 213 864
- EP-A2- 2 476 618
- EP-A2- 2 476 882

## Description

### CROSS-REFERENCE TO RELATED APPLICATIONS

This application claims the benefit of U.S. Provisional Application Serial No. 62/490,782 filed April 27, 2017.

### BACKGROUND

Aircraft are commonly provided with an environmental control system that provides conditioned air to a cabin of the aircraft. The environmental control system may condition air drawn from a gas turbine engine and provide the air to the cabin. A pneumatic control system may regulate the delivery of the air drawn from the gas turbine engine and provided to the environmental control system. However, the control of valves of the pneumatic control system may be unstable due to pressure fluctuations and other dynamic effects. Accordingly it is desirable to provide a more stable and robust pneumatic control system. Environmental control systems are taught in EP 2476 882 or EP2476618.

### BRIEF DESCRIPTION

Disclosed is a distributed environmental control system for an aircraft as defined by claim 1.

### BRIEF DESCRIPTION OF THE DRAWINGS

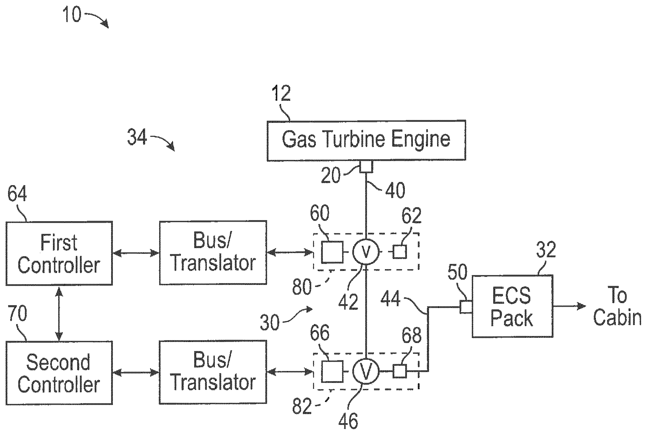

The following descriptions should not be considered limiting in any way. With reference to the accompanying drawings, like elements are numbered alike:
The figure is a schematic diagram of an environmental control system of an aircraft.

### DETAILED DESCRIPTION

A detailed description of one or more embodiments of the disclosed apparatus and method are presented herein by way of exemplification and not limitation with reference to the Figures.

Referring to the figure, a schematic diagram of an environmental control system 10 of an aircraft is illustrated. The environmental control system 10 is configured to receive bleed air from an engine such as a gas turbine engine 12.

The gas turbine engine 12 includes a fan section, a compressor section, a combustor section, and a turbine section all arranged sequentially and form a core flow path through the gas turbine engine 12. The compressor defines or is provided with a first bleed air port 20 that enables the environmental control system 10 to receive air bled from a low pressure compressor and/or a high pressure compressor of the compressor.

The environmental control system 10 includes a valve assembly 30, an environmental control system pack (ECS pack) 32, and a control system 34.

The valve assembly 30 selectively facilitates air to be bled and flow from the gas turbine engine 12 and be provided to the ECS pack 32. The valve assembly 30 includes a first conduit 40, a first valve 42, a second conduit 44, and a second valve 46.

The first conduit 40 extends from the gas turbine engine 12 to the first valve 42 and the second valve 46. The first conduit 40 is fluidly connected to the first bleed air port 20, the first valve 42, and the second valve 46.

The first valve 42 is operatively connected to the first conduit 40 and selectively inhibits or permits bleed air to flow from the first bleed air port 20 to the second valve 46. The first valve 42 includes an actuator that is arranged to change a position of the first valve 42 between a plurality of positions including an open position and a closed position. The actuator may be a power operated actuator such as a pneumatic regulating torque motor, an AC motor, a DC motor, or the like. In at least one embodiment, the actuator may be provided with a switch or position feedback mechanism that provides a first valve position signal indicative of the position of the first valve 42 to the control system 34.

The second conduit 44 extends from the second valve 46 to the ECS pack 32. The second conduit 44 is fluidly connected to the second valve 46 and a port 50 of the ECS pack 32.

The second valve 46 is fluidly connected in series with the first valve 42 by the first conduit 40. The second valve 46 is operatively connected to the second conduit 44 and selectively inhibits or permits bleed air to flow from the first valve 42 to the port 50 of the ECS pack 32. The second valve 46 includes an actuator that is arranged to change a position of the second valve 46 between a plurality of positions including an open position and a closed position. The actuator may be a power operated actuator such as a pneumatic regulating torque motor, an AC motor, a DC motor, or the like. In at least one embodiment, the actuator may be provided with a switch or position feedback mechanism that provides a second valve position signal indicative of the position of the second valve 46 to the control system 34.

The ECS pack 32 is selectively enabled to receive bleed air from the gas turbine engine 12. The ECS pack 32 may include a turbine driven fan or compressor, heat exchangers, and an outlet to the cabin of the aircraft. The bleed air may be conditioned by the ECS pack 32 (heated, cooled, dried, etc.) and provided to the cabin of the aircraft via the outlet.

The control system 34 may be a distributed control system that controls a position of the first valve 42 and the second valve 46. The control system 34 includes a first local feedback controller 60, a first sensor 62, a first controller 64, a second local feedback controller 66, a second sensor 68, and a second controller 70.

The first local feedback controller 60 is in communication with the actuator of the first valve 42, the first sensor 62, and the first controller 64. The first local feedback control 60 is programmed to control a position of the first valve 42 that is associated with the first conduit 40. The first local feedback controller 60 is at least one of a field programmable gate array, a microcontroller, or a microprocessor installed locally with respect to the first valve 42. The first local feedback control 60 may be integrated with the first valve 42, may be disposed proximate the first valve 42, may be integrated with the first sensor 62, and is completely spaced apart from the first controller 64.

The first local feedback controller 60 is programmed to control a position of the first valve 42 based on a first signal provided by the first sensor 62 and a first target control reference provided by the first controller 64. The first signal provided by the first sensor 62 is a signal indicative of at least one of a pressure, flow rate, and a temperature of bleed air within the first conduit 40. As such, the first sensor 62 may be a pressure sensor, a flowmeter, a temperature sensor, or the like that is positioned to monitor a characteristic of the bleed air within the first conduit 40. The first sensor 62 may be integrated with or provided as part of the first local feedback controller 60. The first local feedback controller 60, the first sensor 62, and the first valve 42 may be integrated together or provided together to define a first local control unit 80.

The first controller 64 is completely spaced apart from the first local feedback controller 60. The first controller 64 is programmed to provide the first target control reference to the first local feedback controller 60. The first target control reference may be a first target position of the first valve 42, a target voltage output of the actuator of the first valve 42, a target current output of the actuator of the first valve 42, a target pressure of the bleed air within the first conduit 40, a target temperature of the bleed air within the first conduit 40, or a target flow rate of the bleed air within the first conduit 40.

The first controller 64 provides the first target control reference to the first local feedback controller 60 through a remote data concentrator, translator, or digital communications bus. The first local feedback control 60 receives the first target control reference and controls or drives the actuator such that the first target control reference is achieved and bleed air from the gas turbine engine 12 is received by the ECS pack 32. The first local feedback controller 60 runs a closed loop control between 250 Hz and 10 kHz to provide localized real-time control of the first valve via the actuator, based on the first signal provided by the first sensor 62 and the first target control reference provided by the first controller 64 via the remote data concentrator or digital communications bus.

The second local feedback controller 66 is in communication with the actuator of the second valve 46, the second sensor 68, and the second controller 70. The second local feedback control 66 is programmed to control a position of the second valve 46 that is associated with the second conduit 44. The second local feedback controller 66 is at least one of a field programmable gate array, a microcontroller, or a microprocessor installed locally with respect to the second valve 46. The second local feedback control 66 may be integrated with the second valve 46, may be disposed proximate the second valve 46, may be integrated with the second sensor 68, and is completely spaced apart from the second controller 70.

The second local feedback controller 66 is programmed to control a position of the second valve 46 based on a second signal provided by the second sensor 68 and a second target control reference provided by the second controller 70. The second signal provided by the second sensor 68 is a signal indicative of at least one of a pressure, flow rate, and a temperature of bleed air within the second conduit 44. As such, the second sensor 68 may be a pressure sensor, a flowmeter, a temperature sensor, or the like that is positioned to monitor a characteristic of the bleed air within the second conduit 44. The second sensor 68 may be integrated with or provided as part of the second local feedback controller 66. The second local feedback controller 66, the second sensor 68, and the second valve 46 may be integrated together or provided together to define a second local control unit 82.

The second controller 70 is completely spaced apart from the second local feedback controller 66. The second controller 70 is programmed to provide the second target control reference to the second local feedback controller 66. The second target control reference may be a second target position of the second valve 46, a target voltage output of the actuator of the second valve 46, a target current output of the actuator of the second valve 46, a target pressure of the bleed air within the second conduit 44, a target temperature of the bleed air within the second conduit 44, or a target flow rate of the bleed air within the second conduit 44.

The second controller 70 provides the second target control reference to the second local feedback controller 66 through a remote data concentrator, translator, or digital communications bus. The second local feedback control 66 receives the second target control reference and controls or drives the actuator such that the second target control reference is achieved and bleed air from the gas turbine engine 12 is received by the ECS pack 32. The second local feedback controller 66 runs a closed loop control between 250 Hz and 10 kHz to provide localized real-time control of the first valve via the actuator, based on the second signal provided by the second sensor 68 and the second target control reference provided by the second controller 70 via the remote data concentrator or digital communications bus.

The local feedback controllers being located locally with their respective valves improves the performance of the bleed air system and the environmental control system 10 and provides distributed control system architecture. The distributed control system architecture using the local feedback controllers in conjunction with the controllers enables a more stable controlling of the position of the valves. Furthermore, the externally provided target control reference improves the response time of the valves.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present invention as defined by the claims. In addition, many modifications may be made to adapt a particular situation or material to the teachings of the present invention without departing from the scope thereof. Therefore, it is intended that the present disclosure not be limited to the particular embodiment disclosed as the best mode contemplated for carrying out this invention, but that the invention will include all embodiments falling within the scope of the claims.

## Claims

1. A distributed environmental control system for an aircraft having a gas turbine engine (12) with a bleed air port (20), comprising:
an environmental control system pack (32);
a valve assembly (30) having:
a first sensor (62) operable to provide a first signal,
a first valve (42) having a position associated with the bleed air port to control air flow to the environmental control system;
a first local feedback controller (60) operable to receive a first target control reference, the first local feedback controller (60) operable to actuate the first valve (42) based on the first target control reference and the first signal, wherein the first signal is indicative of at least one of a first pressure, a first flow rate, and a first temperature of bleed air within a first conduit (40) between the bleed air port (20) and the first valve (42);
a second sensor (68) operable to provide a second signal;
a second valve (46) having a second position; and
a second feedback controller (66) operable to receive a second target control reference, the second local feedback controller (66) operable to actuate the second valve (46) based on the second target control reference and the second signal, wherein the second signal is indicative of at least one of a second pressure, a second flow rate, and a second temperature of bleed air within a second conduit (44) between the second valve (46) and the environmental control system pack (32).

2. The distributed environmental control system of claim 1, wherein the
valve assembly comprises:
a first local control unit comprising:
the first sensor (62),
the first valve (42),
the first local feedback controller (60),
a first controller (64) being programmed to provide the first target control reference to the first local feedback controller (60); and
a second local control unit having:
the second sensor (68);
the second valve (46); and
the second local feedback controller 66); and
a second controller (70) being programmed to provide the second target control reference to the second local feedback controller (66).

3. The distributed environmental control system of claim 1 or 2, wherein the first target control reference is at least one of a target position of the first valve (42) and a voltage and/or current output of an actuator associated with the first valve (42).

4. The distributed environmental control system of any preceding claim, wherein the first sensor (62) is integrated with at least one of the first valve (42) and the first local feedback controller (64) to form the first local control unit.

5. The distributed environmental control system of claim 1, wherein the first local feedback controller : (60) is programmed to control a position of the first valve (42) based on a first target control reference and the first signal.

6. The distributed environmental control system of claim 5, wherein the first target control reference is a first target position of the first valve (42).

## Patentansprüche

1. Verteiltes Umgebungssteuerungssystem für ein Flugzeug, das ein Gasturbinentriebwerk (12) mit einem Zapfluftanschluss (20) aufweist, umfassend:
ein Umgebungssteuerungssystempaket (32);
eine Ventilanordnung (30), die aufweist:
einen ersten Sensor (62), der betreibbar ist, um ein erstes Signal bereitzustellen,
ein erstes Ventil (42) mit einer Position, die dem Zapfluftanschluss zugeordnet ist, um den Luftstrom zu dem Umgebungssteuerungssystem zu steuern;
eine erste lokale Rückkopplungssteuerung (60), die betreibbar ist, um eine erste Zielsteuerungsreferenz zu empfangen, wobei die erste lokale Rückkopplungssteuerung (60) betreibbar ist, um das erste Ventil (42) auf Grundlage der ersten Zielsteuerungsreferenz und des ersten Signals zu betätigen, wobei das erste Signal mindestens eine/n von einem ersten Druck,
einer ersten Durchflussrate und einer ersten Temperatur von Zapfluft innerhalb einer ersten Leitung (40) zwischen dem Zapfluftanschluss (20) und dem ersten Ventil (42) angibt;
einen zweiten Sensor (68), der betreibbar ist, ein zweites Signal bereitzustellen;
ein zweites Ventil (46) mit einer zweiten Position; und
eine zweite Rückkopplungssteuerung (66), die betreibbar ist, um eine zweite Zielsteuerungsreferenz zu empfangen, wobei die zweite lokale Rückkopplungssteuerung (66) betreibbar ist, um das zweite Ventil (46) auf Grundlage der zweiten Zielsteuerungsreferenz und des zweiten Signals zu betätigen,
wobei das zweite Signal mindestens eine/n von einem zweiten Druck, einer zweiten Durchflussrate und einer zweiten Temperatur von Zapfluft innerhalb einer zweiten Leitung (44) zwischen dem zweiten Ventil (46) und dem Umgebungssteuerungssystempaket (32) angibt.

2. Verteiltes Umgebungssteuerungssystem nach Anspruch 1, wobei die Ventilanordnung umfasst:
eine erste lokale Steuereinheit, umfassend:
den ersten Sensor (62),
das erste Ventil (42),
die erste lokale Rückkopplungssteuerung (60),
eine erste Steuerung (64), die programmiert ist, der ersten lokalen Rückkopplungssteuerung (60) die erste Zielsteuerungsreferenz bereitzustellen; und
eine zweite lokale Steuereinheit, die Folgendes aufweist:
den zweiten Sensor (68);
das zweite Ventil (46); und
die zweite lokale Rückkopplungssteuerung (66); und
eine zweite Steuerung (70), die programmiert ist, der zweiten lokalen Rückkopplungssteuerung (66) die zweite Zielsteuerungsreferenz bereitzustellen.

3. Verteiltes Umgebungssteuerungssystem nach Anspruch 1 oder 2, wobei die erste Zielsteuerungsreferenz mindestens eines von einer Zielposition des ersten Ventils (42) und einem Spannungs- und/oder Stromausgang eines dem ersten Ventil (42) zugeordneten Aktuators ist.

4. Verteiltes Umgebungssteuerungssystem nach einem der vorhergehenden Ansprüche, wobei der erste Sensor (62) mit mindestens einem von dem ersten Ventil (42) und der ersten lokalen Rückkopplungssteuerung (64) integriert ist, um die erste lokale Steuereinheit auszubilden.

5. Verteiltes Umgebungssteuerungssystem nach Anspruch 1, wobei die erste lokale Rückkopplungssteuerung (60) programmiert ist, eine Position des ersten Ventils (42) auf Grundlage einer ersten Zielsteuerungsreferenz und des ersten Signals zu steuern.

6. Verteiltes Umgebungssteuerungssystem nach Anspruch 5, wobei die erste Zielsteuerungsreferenz eine erste Zielposition des ersten Ventils (42) ist.

## Revendications

1. Système de commande environnemental distribué pour un aéronef ayant un moteur à turbine à gaz (12) avec un orifice d'air prélevé (20), comprenant :
un bloc de système de commande environnemental (32) ;
un ensemble de soupapes (30) ayant :
un premier capteur (62) pouvant fonctionner pour fournir un premier signal,
une première soupape (42) ayant une position associée à l'orifice d'air prélevé pour réguler le débit d'air vers le système de commande environnemental ;
un premier dispositif de commande de rétroaction local (60) pouvant fonctionner pour recevoir une première référence de commande cible, le premier dispositif de commande de rétroaction local (60) pouvant fonctionner pour actionner la première soupape (42) sur la base de la première référence de commande cible et du premier signal, dans lequel le premier signal indique au moins l'un d'une première pression, d'un premier débit et d'une première température d'air prélevé à l'intérieur d'un premier conduit (40) entre l'orifice d'air prélevé (20) et la première soupape (42) ;
un second capteur (68) pouvant fonctionner pour fournir un second signal ;
une seconde soupape (46) ayant une seconde position ; et
un second dispositif de commande de rétroaction (66) pouvant fonctionner pour recevoir une seconde référence de commande cible, le second dispositif de commande de rétroaction local (66) pouvant fonctionner pour actionner la seconde soupape (46) sur la base de la seconde référence de commande cible et du second signal, dans lequel le second signal indique au moins l'un d'une seconde pression, d'un second débit et d'une seconde température d'air prélevé à l'intérieur d'un second conduit (44) entre la seconde soupape (46) et le bloc de système de commande environnemental (32).

2. Système de commande environnemental distribué selon la revendication 1, dans lequel l'ensemble de soupapes comprend :
une première unité de commande locale comprenant :
le premier capteur (62),
la première soupape (42),
le premier dispositif de commande de rétroaction local (60),
un premier dispositif de commande (64) étant programmé pour fournir la première référence de commande cible au premier dispositif de commande de rétroaction local (60) ; et
une seconde unité de commande locale ayant :
le second capteur (68) ;
la seconde soupape (46) ; et
le second dispositif de commande de rétroaction local (66) ; et
un second dispositif de commande (70) étant programmé pour fournir la seconde référence de commande cible au second dispositif de commande de rétroaction local (66).

3. Système de commande environnemental distribué selon la revendication 1 ou 2, dans lequel la première référence de commande cible est au moins l'une parmi une position cible de la première soupape (42) et une sortie de tension et/ou de courant d'un actionneur associé à la première soupape (42).

4. Système de commande environnemental distribué selon une quelconque revendication précédente, dans lequel le premier capteur (62) est intégré à au moins l'un parmi la première soupape (42) et le premier dispositif de commande de rétroaction local (64) pour former la première unité de commande locale.

5. Système de commande environnemental distribué selon la revendication 1, dans lequel le premier dispositif de commande de rétroaction local (60) est programmé pour commander une position de la première soupape (42) sur la base d'une première référence de commande cible et du premier signal.

6. Système de commande environnemental distribué selon la revendication 5, dans lequel la première référence de commande cible est une première position cible de la première soupape (42) .
